# EUROPEAN PATENT APPLICATION

(11) **EP 1 976 201 A1**
(43) Date of publication of application: **01.10.2008**
(21) Application number: 07251434.2
(22) Date of filing: 30.03.2007
(51) Int. Cl.: H04L 12/56, H04L 12/28

(54) **Shared communication capabilities of mobile stations for high bandwidth communications**

(71) Applicant: Lucent Technologies Inc., Murray Hill NJ 07974-0636 (US)
(72) Inventor: Van Willigenburg, Willem Cornelis, 1223 JR Hilversum (NL)
(74) Representative: Cockayne, Gillian

(57) **Abstract**

A wireless communication arrangement (20) includes a plurality of mobile stations (22, 24, 26) and a remotely located server (28). A local group connection (44) among the mobile stations and individual wireless links (32, 34, 36) between the mobile stations and the server (28) facilitate realizing a higher effective bandwidth for communicating between the server (28) and any one of the mobile stations. In a disclosed example, a high bandwidth communication is divided into a plurality of portions that are each transmitted over one of the wireless links between a corresponding mobile station and the server. When the mobile stations divide up a communication and transmit it to the server, the server combines the portions into the entire communication. The local group connection among the mobile stations facilitates dividing up the communication in this manner. When the server 28 transmits a plurality of portions to the individual mobile stations, the local group connection facilitates combining those portions into the entire communication.

## Description

### 1. Field of the Invention

This invention generally relates to communication. More particularly, this invention relates to high bandwidth communications.

### 2. Description of the Related Art

Communication systems are in use for a variety of purposes and they take many forms. One popular type of communication system is a wireless communication system that allows individuals to communicate using mobile stations (e.g., cell phones, laptop computers or personal digital assistants). Such wireless communication systems have been providing increasing capabilities to subscribers. Current wireless systems are used for voice communications, data communications, internet surfing, email, multi-media applications and combinations of these. There is a desire to provide even more and better service to subscribers.

Once challenge that arises when trying to increase the quality and versatility of wireless communications is that it is difficult to communicate large amounts of information very rapidly given current bandwidth availability. A mobile station typically has a wireless link with a wireless communication network over which communications are transmitted between the network and the mobile station. Wireless links have limited bandwidth and, therefore, limit the amount of information that can be exchanged between the mobile station and the network. More complex types of communications require higher bandwidth. Various applications and programs that individuals would like to run on a mobile station using a wireless communication link require more bandwidth than is currently available. In some cases, an application could be run but the quality seems less than desirable because of a slower exchange of information due to the available bandwidth.

It would be beneficial to provide improved arrangements that allow for accomplishing higher bandwidth communications without having to significantly alter existing wireless communication network infrastructure.

### SUMMARY

An exemplary method of communication and an exemplary mobile station device are defined by the appended claims.

One example method of communicating includes communicating between a server and a plurality of mobile stations over a corresponding plurality of wireless links between the server and the mobile stations. The plurality of mobile stations have a local group connection between them that is distinct from the wireless links. A communication is divided into a plurality of portions. A first one of the portions is transmitted over a first one of the wireless links between one of the mobile stations and the server. A second one of the portions is transmitted over a second one of the wireless links between another one of the mobile stations and the server. An indication regarding how the portions are to be combined is provided such that the entire communication is available for a receiver.

In one example, at least one of the mobile stations is the receiver that obtains the entire communication. In another example, the server is the receiver that obtains the entire communication.

An example mobile station device comprises a transceiver portion for communicating over a wireless communication link with a remotely located server. A group connection portion is for communicating with at least one other device over a local group connection that is distinct from the wireless communication link. A group bandwidth sharing module of the mobile station device is configured to transmit at least one portion of a communication shared by the mobile station device and the at least one other device over the wireless communication link. The group bandwidth sharing module is also configured to combine at least one portion of a communication received by the mobile station device over the wireless communication link with at least one other portion of the same communication received by the at least one other device. This combination allows for obtaining the entire communication at the mobile station device without requiring the entire communication to be transmitted over the wireless communication link between the mobile station device and the remotely located server.

The various features and advantages of the disclosed example arrangements will become apparent to those skilled in the art from the following detailed description. The drawings that accompany the detailed description can be briefly described as follows.

### BRIEF DESCRIPTION OF THE DRAWINGS

Figure 1 schematically illustrates selected portions of a wireless communication arrangement that is useful with an embodiment of this invention.

Figure 2 is a flowchart diagram summarizing an example approach that is useful with the embodiment of Figure 1, for example.

Figure 3 is a flowchart diagram summarizing another example approach that is useful with the embodiment of Figure 1, for example.

### DETAILED DESCRIPTION

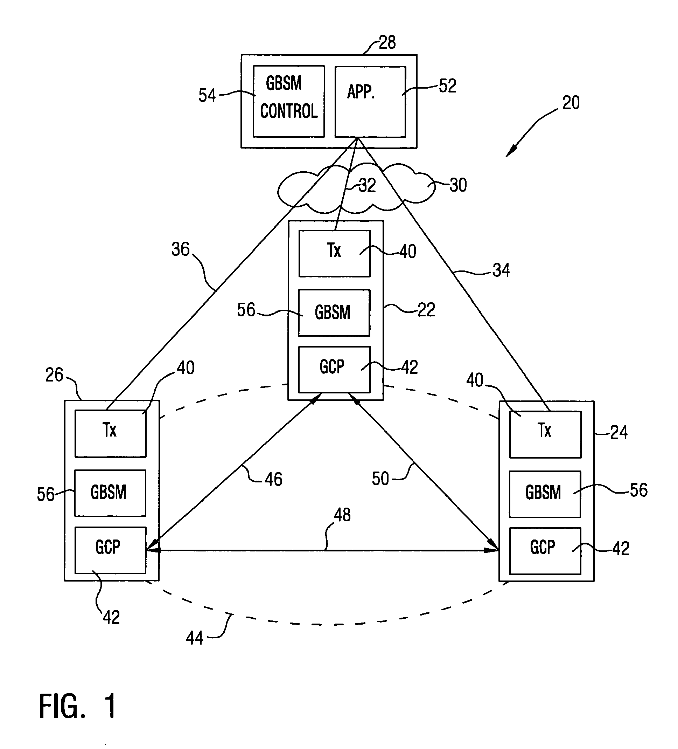

Figure 1 schematically shows selected portions of a wireless communication arrangement 20 including a plurality of mobile stations 22, 24 and 26 and a remotely located server 28. A wireless network 30 facilitates wireless communication links 32, 34 and 36 between the server 28 and the mobile stations 22, 24 and 26, respectively. Each of the wireless links 32, 34 and 36 allows for communications between the respective mobile stations and the server using known wireless communication techniques. Each wireless station includes a transceiver portion 40 that is useful for uplink and downlink communications over the respective link with the server 28.

Each mobile station includes a group connection portion 42 for establishing a local group connection 44 between the mobile stations. In one example, the local group connection 44 uses Bluetooth technology. In another example, the local group connection 44 uses WiFi technology. The local group connection 44 allows for communications among the mobile stations as schematically shown at 46, 48 and 50.

In one example, the mobile stations use the local group connection 44 for sharing a common application that is run by each of the mobile stations. In this sense, such an application can be considered a common application to the mobile stations or a shared application.

The server 28 facilitates the same application 52. The server 28 includes a group bandwidth sharing manager (GBSM) 54 that is useful for controlling how the mobile stations share information for running the common application 52. Each of the example mobile stations includes a group bandwidth sharing module 56 that communicates with the GBSM 54 for facilitating communications among the mobile stations over the local group connection 44 on the one hand and between each of the mobile stations and the server 28 for purposes of running the application 52 on the other hand.

One feature of the example of Figure 1 is that the amount of bandwidth required for efficiently running an application and communicating the necessary associated data between the server 28 and a mobile station is divided among the individual wireless links 32, 34 and 36, which effectively provides an increased total bandwidth. Instead of being limited to the bandwidth available to a single wireless link between one mobile station and the server 28, the total achievable bandwidth is based on that which is available over all of the wireless links involved. The local group connection 44, the GBSM 54 and the group bandwidth sharing modules 56 facilitate realizing the effect of the combined bandwidth from the individual wireless communication links 32, 34 and 36.

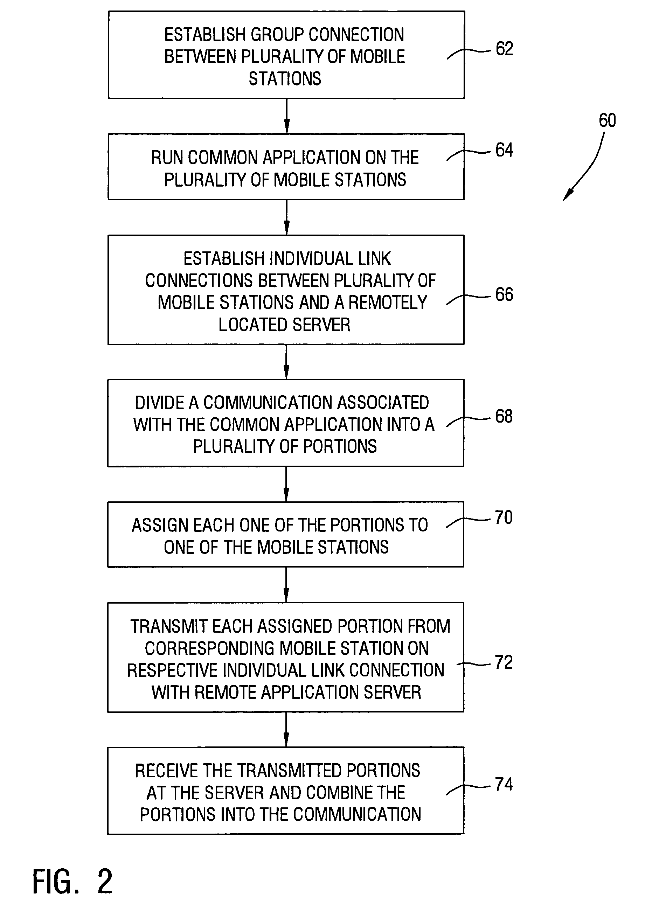

Figure 2 summarizes a technique for providing a communication to the server 28 from the mobile stations, for example, in a flow chart diagram 60. At 62 a group connection is established between the plurality of mobile stations 22, 24 and 26. The group connection 44 may be based upon WiFi or Bluetooth technologies, for example. As represented at 64, a common application will be run on the plurality of mobile stations. Individual links are established (e.g., the wireless communication links 32, 34 and 36) between the mobile stations and the remotely located server 28.

As shown at 68, a communication associated with the application run on the mobile stations is divided into a plurality of portions. For example, a data communication necessary for running the application 52 will have a certain size (e.g., number of bits) that could exceed the bandwidth of any of the individual wireless communication links 32, 34 and 36. Instead of trying to transmit the entire communication over one of those links, the communication is divided into a plurality of portions, each having a reduced size compared to the entire communication. At 70, each one of the portions of the divided communication is assigned to a corresponding one of the mobile stations.

At 72, each mobile station transmits its assigned portion over the corresponding wireless link to the server 28. At 74, the server 28 receives all of the transmitted portions and combines them into the original communication necessary for running the application 52.

In this example, the local group connection 44 facilitates communications between the mobile stations regarding how the communication will be divided into portions and facilitates the assignment of each portion to the respective mobile stations. In one example, the GBSM 54 provides information to the group bandwidth sharing modules 56 on the mobile stations to indicate how a communication should be divided among the mobile stations. In one example, the GBSM 54 determines what mobile stations belong to a particular group having a local group connection 44 and communicating with the application 52 on the server 28. The GBSM 54 facilitates dividing communications into portions and combining them back into the entire communication so that the individual portions can be communicated over the individual wireless links between the server 28 and the mobile stations 22, 24 and 26, respectively. The group bandwidth sharing modules 56 and the group connection portions 42 of each mobile station coordinate communications among the mobile stations to achieve the desired apportionment of a communication among the mobile stations and the communication of those portions between the server 28 and the mobile stations.

In one example, one of the mobile stations 22 will be assigned the task of being a coordinator mobile station. The GBSM 54 can communicate primarily with the group bandwidth sharing module 56 of the coordinator mobile station for providing instructions for dividing communications to be sent to the server. The coordinator mobile station responsively provides corresponding instructions to the other mobile stations through the local group connection 44. The GBSM 54 can also primarily communicate with the coordinator mobile station regarding how respective portions sent by the server 28 to the individual mobile stations should be combined to achieve the entire communication. In this situation, the coordinator mobile station communicates with the other mobile stations over the local group connection 44 so that they share the received portions in a manner that they are combined into the entire communication for use by any or all of the mobile stations. Such an example allows for reducing the number of communications between the GBSM 54 and the individual mobile stations and relies upon the local group connection 44 for sharing information among the mobile stations regarding how communication portions should be handled.

In one example, the GBSM 54 instructs the mobile stations how to divide up communications or how to allocate bandwidth among the different links between the server 28 and the mobile stations. In such an example, when the group bandwidth sharing modules 56 of the mobile stations respond to such an instruction from the GBSM 54, the GBSM 54 already knows how to recombine communication portions received over the individual wireless links 32, 34 and 36. In another example, the wireless stations provide an indication along with transmitted portions of a communication to allow the server 28 to determine how to combine those portions into the entire communication so that it is available for the application 52.

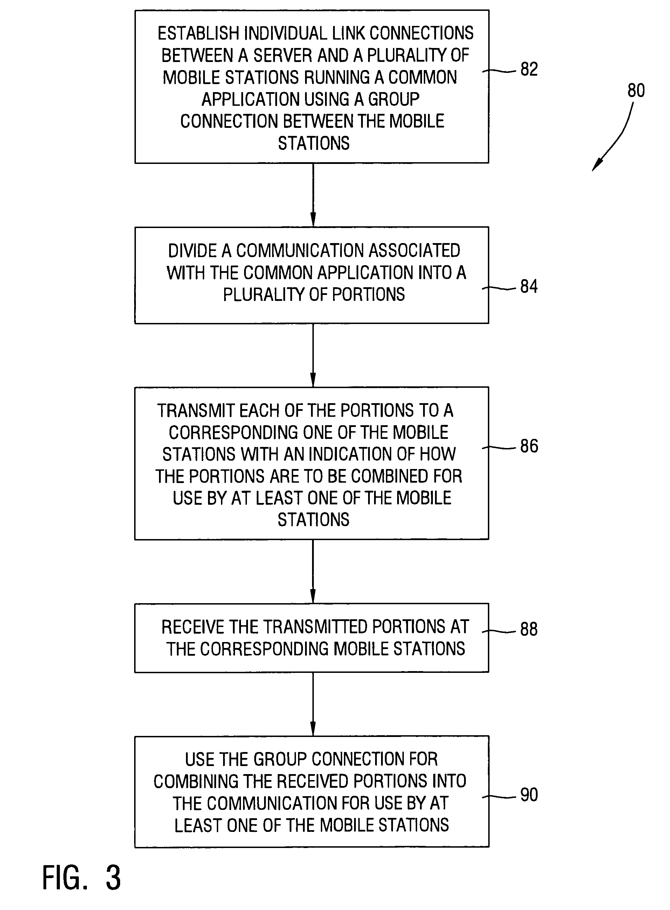

Figure 3 includes a flowchart diagram 80 that summarizes an approach for providing a communication from the server 28 to the mobile stations. At 82, the individual wireless link connections 32, 34 and 36 are established between the server 28 and the plurality of mobile stations, which are running a common application using the local group connection 44 between the mobile stations. At 84, a communication associated with the common application is divided into a plurality of portions at the application 52. At 86, each of the portions is transmitted to a corresponding one of the mobile stations. Each portion is transmitted over one of the individual wireless links 32, 34 and 36 in one example. The transmitted portions include an indication of how the portions are to be combined for eventual use by at least one of the mobile stations. In some examples, some of the communications between the server 28 and the mobile stations will not be required by all of the mobile stations. In other examples, the communication will be relevant to running the common application 52 and, therefore, will eventually be used by all of the mobile stations. In either scenario, the server 28 in this example provides an indication of how the individual portions transmitted on the individual wireless links 32, 34 and 36 should be combined using the local group connection 44 so that the entire communication is available to any of the mobile stations requiring that communication.

At 88, each of the mobile stations receives the corresponding portion transmitted to it over its individual wireless link with the server 28. At 90, the group bandwidth sharing modules 56 and the group connection portions 42 use the local group connection 44 for communicating the different portions among the different mobile stations for combining the received portions into the communication so that the entire communication is available for at least one of the mobile stations.

It can be appreciated from the disclosed examples how a local group connection among a plurality of mobile stations can be used in combination with individual wireless links between the mobile stations and a remotely located server for realizing an effective higher bandwidth of communication between the server and the mobile stations. With the disclosed example, it is not necessary to transmit an entire high bandwidth communication over a single link between a mobile station and a server. Instead, a high bandwidth communication can be divided into portions and transmitted over a plurality of links between the plurality of mobile stations and the server. The local group connection between the mobile stations facilitates dividing a communication that will be transmitted to the server and combining a plurality of portions of a communication received from the server. In either event, the intended receiver (e.g., the server or the mobile stations) has the entire communication available once the individually transmitted portions are combined.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A method of communicating, comprising the steps of:
communicating between a server and a plurality of mobile stations over a corresponding plurality of wireless links between the server and the mobile stations, the plurality of mobile stations having a local group connection between the mobile stations that is distinct from the wireless links;
**characterized by**
dividing a communication into a plurality of portions;
transmitting a first one of the portions over a first one of the wireless links between a first one of the mobile stations and the server;
transmitting a second one of the portions over a second one of the wireless links between a second one of the mobile stations and the server; and
providing an indication regarding how the portions are to be combined such that the entire communication is available for a receiver.

2. The method of claim 1, wherein the mobile stations transmit the portions and the server is the receiver.

3. The method of either of claims 1 or 2, comprising
providing an indication to the mobile stations how to divide up a communication intended for the server; and
using the provided indication for combining a subsequently received plurality of portions from the mobile stations.

4. The method of either of claims 1 or 2, comprising
using an indication associated with the portions for determining how to combine the portions.

5. The method of claim 1, wherein the server transmits the portions and at least one of the mobile stations is the receiver.

6. The method of claim 5, comprising
providing the entire communication to all of the plurality of mobile stations.

7. The method of either of claims 5 or 6, comprising
using at least one group bandwidth sharing module of at least one of the mobile stations for determining how to combine the portions into the complete communication.

8. The method of any of claims 1, or 5-7, comprising
establishing a local group connection among the plurality of mobile stations;
running a common application on each of the mobile stations using the local group connection;
using the local group connection for dividing up a communication into a plurality of portions for transmitting the portions from respective ones of the mobile stations; and
using the local group connection for combining a plurality of received portions into a single communication for at least one of the mobile stations.

9. The method of any of claims 1-8, wherein the mobile stations run an application and the divided communication comprises data associated with the application.

10. The method of claim 9, wherein the application facilitates one of playing a game or viewing a video.

11. A mobile station device, comprising
a transceiver portion for communicating over a wireless communication link with a remotely located server;
a group connection portion for communicating with at least one other device over a local group connection that is distinct from the wireless communication link; and
**characterized by**
a group bandwidth sharing module that is configured to
transmit at least one portion of a communication shared by the mobile station device and the at least one other device over the wireless communication link, and
combine at least one portion of a communication received by the mobile station device over the wireless communication link with at least one other portion of the communication received by the at least one other device for obtaining the entire communication at the mobile station device.

12. The mobile station device of claim 11, wherein the group connection portion communicates with at least one other device using a first protocol and the transceiver portion communicates with the server using a second, different protocol.

13. The mobile station device of claim 12, wherein the first protocol comprises at least one of a Bluetooth protocol or a WiFi protocol.

14. The mobile station device of claim 11, wherein the mobile station runs an application and the portions of the communication comprise portions of data associated with the application.

15. The mobile station device of claim 14, wherein the application facilitates one of playing a game or viewing a video.

16. A wireless communication server device, comprising
a transceiver portion for communicating over a plurality of wireless links with a corresponding plurality of mobile stations; and
**characterized by**
a group bandwidth sharing manager that is configured to
divide a communication intended for at least one of the mobile stations into a plurality of portions and transmit each of the portions over a respective one of the links; and
receive at least one portion of a communication on each of the wireless links, respectively, and combine the received portions into a single communication.

17. The device of claim 16, wherein the group bandwidth sharing manager is configured to provide an indication to the mobile stations how to divide a communication among the mobile stations for transmitting the portions of the communication the server device.

18. The device of claim 16, wherein the server device runs an application and the portions of the communication comprise portions of data associated with the application.

19. The device of claim 18, wherein the application facilitates one of playing a game or viewing a video.
